# EUROPÄISCHE PATENTSCHRIFT

(11) **EP 2 599 694 B1**
(45) Veröffentlichungstag und Bekanntmachung des Hinweises auf die Patenterteilung: **24.09.2014**
(21) Anmeldenummer: 11009423.2
(22) Anmeldetag: 29.11.2011
(51) Int. Cl.: B62H 3/04

(54) **Haltevorrichtung**
Clamping device
Dispositif de retenue

(43) Veröffentlichungstag der Anmeldung: 05.06.2013
(73) Patentinhaber: Angerer, Richard, 88353 Kisslegg (DE)
(72) Erfinder: Angerer, Richard, 88353 Kisslegg (DE)
(74) Vertreter: Otten, Roth, Dobler & Partner

(56) Entgegenhaltungen:
- WO-A1-2005/063554
- CH-A- 211 408
- DE-A1- 10 061 736
- DE-U1- 29 812 316
- GB-A- 2 457 991
- US-A- 3 907 114

## Beschreibung

Die Erfindung betrifft eine Vorrichtung zum Halten eines Fahrrades.

Handelsübliche Vorrichtungen zum Halten eines Fahrzeuges sind in einer Vielzahl aus dem Stand der Technik bekannt, wobei ein großer Anteil von derartigen Vorrichtungen das Halten eines Fahrzeuges im Bereich eines Fahrzeugrades vorsehen.

Allerdings verursachen viele derartige Vorrichtungen Schäden am Fahrzeug, insbesondere an der Felge oder an den Speichen von zu haltenden Fahrrädern.

Die Aufgabe der Erfindung ist es, eine Vorrichtung zum Halten eines Fahrrads derart weiterzubilden, dass ein einfaches und sicheres Halten von Fahrrädern mit unterschiedlichen Radgrößen ausführbar ist und Beschädigungen am Fahrzeug durch das Halten zu vermeiden.

Diese Aufgabe wird durch die Merkmale des Patentanspruchs 1 gelöst.

Die DE-A-100 61 736 offenbart eine Vorrichtung mit den Merkmalen des Oberbegriffs des Anspruchs 1.

Vorteilhafte Weiterbildungen sowie zweckmäßige Ausgestaltungen sind in den abhängigen Ansprüchen angegeben.

### Beschreibung der Erfindung

Die erfindungsgemäße Vorrichtung ist definiert im Anspruch 1.

Durch die erfindungsgemäße Haltevorrichtung kann ein sicheres Halten von einem Fahrzeug, sowie ein raumsparendes Halten von mehreren Fahrzeugen, insbesondere von Fahrrädern mit jeweils unterschiedlichen Radgrößen ausgeführt werden.

Aufgrund des gekrümmten Verlaufs der Führungsschiene wird eine sich keilförmig erweiternde Öffnung zwischen zwei voneinander beabstandeten Klemmbacken gebildet, wobei sich zwischen den Klemmbacken und der Manteloberfläche eines zu haltenden Fahrrades linien- bzw. punktförmige Anlageflächen bilden. Die keilförmig voneinander beabstandete Anordnung der Klemmbacken vermindert das Risiko einer eventuellen Beschädigung des Rades eines Fahrzeugs, beispielsweise der Manteloberfläche, der Radspeichen und/oder der Felge eines Fahrrades.

Darüber hinaus kann die erfindungsgemäße Vorrichtung aufgrund ihrer kompakten Bauweise für eine Vielzahl von unterschiedlichen Befestigungsarten an unterschiedlichen Befestigungsorten verwendet werden.

In einer zweckmäßigen Ausgestaltung der Erfindung ist es vorgesehen, dass die Vorrichtung zwei Führungsschienen aufweist.

Die beiden Führungsschienen werden vorzugsweise derart beabstandet voneinander angeordnet, dass die in den Führungsschienen geführten Klemmbacken eine in vertikaler Richtung übereinanderliegende Position einnehmen, wobei die Position der Klemmbacken aufgrund ihrer V-förmigen Anordnung in den Führungsschienen mit Bezug auf die Geometrie des zu haltenden Rades eines Fahrzeugs von der vertikalen Richtung abweichen kann.

Dies hat den Vorteil, dass die Standsicherheit eines zu haltenden Fahrzeuges aufgrund der zusätzlich gebildeten Anlagepunkze zwischen den Klemmbacken und eines zu haltenden Rades verbessert werden kann.

In einer überdies zweckmäßigen Ausgestaltung ist die Führungsschiene in einer Grundplatte integriert.
Die Führungsschiene ist mit der Grundplatte vorzugsweise einstückig ausgeführt, wobei die zur Fahrzeug weisende Oberfläche der Grundplatte einen konvexen Oberflächenverlauf aufweist. Durch die integrierte Ausführungsform der Führungsschiene kann die Vorrichtung einfach, kompakt und kostengünstig gegenüber einer mehrteiligen Ausführungsform einer Vorrichtung hergestellt werden.

überdies ist in einer weiteren, zweckmäßigen Ausgestaltung der Erfindung vorgesehen, dass die Klemmbacke laschenförmig ausgebildet ist. Unter der Bezeichnung "laschenförmig" ist im Sinne der Erfindung ein flächiges Materialstück zu verstehen.

Die laschenförmige Klemmbacke bildet ein Verbindungselement zwischen dem zu haltenden Fahrzeug und der Haltevorrichtung aus. Zwischen zwei laschenförmigen Klemmbacken wird eine sich keilförmig erweiternde Öffnung mit einem Tiefenmaß gebildet, welches ein sicheres Halten von Fahrrädern mit einer schmalen als auch mit einer breiten Reifenbreite des Rades ermöglicht.

Horizontal Erfindungsgemäß ist der Abstand zwischen zwei Klemmbacken variabel einstellbar. Der Abstand zwischen zwei Klemmbacken kann in horizontaler als auch in vertikaler Anordnungsebene eingestellt werden. Die Einstellung der Klemmbacken in horizontaler Anordnungsebene ermöglicht eine Anpassung an unterschiedlichen Reifendicken von Fahrrädern. Die Einstellung in vertikaler Anordnungsebene kann durch den Abstand von zwei zueinander beabstandet angeordneten Führungsschienen ausgeführt werden, wodurch eine verbesserte Anpassung an Fahrrädern mit unterschiedlichen Radgrößen ermöglicht wird.

Überdies ist es in einer weiteren Ausgestaltung der Erfindung vorgesehen, dass die Position der Klemmbacke derart einstellbar ist, dass die Längsachse der laschenförmigen Klemmbacke tangential zum Reifen eines Fahrzeugs ausrichtbar ist.

Eine Einstellung der Klemmbacken erfolgt über eine Verschiebung der Klemmbacken in den Führungsschienen. Die tangentiale Ausrichtung der laschenförmigen Klemmbacke hat den Vorteil, dass lediglich ein Abschnitt der seitlichen Reifenoberfläche eines Rades einen Kontakt mit den Klemmbacken bildet, wodurch beispielsweise unerwünschte Beschädigungen an der Radfelge oder den Radspeichen vermieden werden können. Über dies ist es in einer zweckmäßigen Ausgestaltung der Erfindung vorgesehen, dass die Klemmbacke derart ausgebildet ist, dass ihre Form beim Angreifen an dem Reifen dessen Verlauf folgt.

Die Klemmbacken können in der Führungsschiene mit einem zur horizontalen Ebene abweichenden Verlauf der Längsachse angeordnet werden, wodurch das freie Ende einer Klemmbacke in Richtung einer Bodenfläche oder in einer der Bodenfläche entgegengesetzte Richtung weist. Dadurch kann der Abstand der Kontaktflächen zwischen zwei übereinander angeordneten Klemmbacken vergrößert werden, was ein verbessertes Halten des Rades eines Fahrzeuges in der Vorrichtung ermöglicht.

Überdies sieht eine weitere Ausführungsform der Erfindung vor, dass die Breitenabmessung der laschenförmigen Klemmbacke einem Dickenmaß des Reifens eines Fahrzeuges angepasst ist. Unter einem Breitenmaß der Klemmbacke ist im Sinne der Erfindung jener Abstand zu verstehen, welcher sich zwischen den beiden parallel zur Längsachse verlaufenden Seitenlängen der Klemmbacke erstrecken. Vorzugsweise entspricht das Breitenmaß der Klemmbacke in etwa der Reifenhöhe, welche dem radialen Abstand zwischen der Außenoberfläche der Reifenfelge und der Außenoberfläche des Reifens entspricht. Eine Anpassung hat den Vorteil, dass eine Beschädigung der Reifenfelge bzw. der Radspeichen unabhängig von der Anordnungsposition einer Klemmbacke vermieden werden kann.

Eine weitere Ausgestaltung der Erfindung sieht vor, dass die Klemmbacke auf mindestens zwei Stirnflächen Einkerbungen zu einer Anordnung auf Umschlag aufweist.
Aufgrund der Anordnung der Einkerbungen an verschiedenen Seitenflächen der Klemmbacke kann die Position der Klemmbacken auf Fahrräder mit unterschiedlichen Reifengrößen angepasst werden. Dies hat den Vorteil, dass aufgrund der Anpassung nahezu alle Radgrößen mit ausreichenden Kontaktstellen zwischen den Klemmbacken und den seitlichen Mantelflächen des Rades gehalten werden können, wodurch die Standsicherheit des Fahrrades wiederum verbessert werden kann.
Vorzugsweise weist jede Klemmbacke auf ihrer Längs- als auch auf ihrer Stirnseite Einkerbungen auf, welche in entsprechende Einkerbungen in der Führungsschiene formschlüssig eingreifen. Diese Einkerbungen an den Längs- bzw. Stirnflächen der Klemmbacke sind derart ausgebildet, dass die Längsachse der Klemmbacke in einem Winkelabstand zu einer horizontalen Ebene verläuft. Weiterhin ist mit den angeordneten Einkerbungen eine einfache Positionsänderung durch ein Umdrehen der Klemmbacke möglich, da die Einkerbungen eine Anordnung der Klemmbacke auf Umschlag vorsehen.

In einer weiteren zweckmäßigen Ausgestaltung der Erfindung weist die Grundplatte eine der fahrradaufnehmenden Seite gegenüberliegenden, ebene Auflagefläche auf. Die ebene Auflagefläche ermöglicht eine Anordnung der Vorrichtung auf einer Oberfläche, beispielsweise auf einer Wandoberfläche, wodurch die Haltevorrichtung insgesamt eine lagestabile Position einnehmen kann.

Über dies ist es in einer weitern Ausgestaltung vorgesehen, dass eine Befestigungsvorrichtung zur Befestigung an einem Fahrzeug, einem Gebäude, einem Aufbau oder dergleichen vorhanden ist.

Die Befestigungsvorrichtung kann beispielsweise als winkelförmige oder als U-förmige Befestigungsvorrichtung ausgebildet sein, wodurch eine Anordnung der Haltevorrichtung beispielsweise an einem Pfosten, an einem Deichselholm eines Caravans oder Wohnmobils oder an einer Gebäudewand ausgeführt werden kann. Eine derartige Befestigungsvorrichtung hat den Vorteil, dass die erfindungsgemäße Haltevorrichtung in unterschiedlichen Positionen an verschiedenartigen Befestigungsorten bzw. Gegenständen befestigbar ist. Bei Bedarf kann die Vorrichtung am parkenden Wohnmobil bzw. Caravan in einfacher Weise montiert werden und bis zur Weiterfahrt verwendet werden.

Es ist in einer weiteren, bevorzugten Ausgestaltung der Erfindung vorgesehen, dass die Vorrichtung zylinderförmig ausgebildet ist. Die zylinderförmige Ausbildung der Vorrichtung sieht vor, dass mehrere, nebeneinander angeordnete Klemmbacken auf einer ringförmig ausgebildeten Führungsschiene geführt bzw. gelagert werden können. Dies hat den Vorteil, dass beispielsweise eine derartige Haltevorrichtung eine Vielzahl von Fahrrädern sicher und lagestabil in einer sternförmigen Anordnung in der Haltevorrichtung aufgenommen werden können.

In einem weiteren Aspekt der Erfindung ist es vorgesehen, dass ein Fahrzeug, insbesondere Camping- und/oder Caravanfahrzeug zur Aufnahme bzw. Anordnung einer Vorrichtung nach einer der vorgenannten Ausgestaltungen ausgebildet ist.
Die erfindungsgemäße Vorrichtung zum Halten eines Fahrzeuges, insbesondere eines Fahrrades, kann beispielsweise auf der Rückwand eines Camping- und/oder Caravanfahrzeugs mittels entsprechender Befestigungsmittel angeordnet werden.
Es ist auch denkbar, dass die erfindungsgemäße Vorrichtung beispielsweise an einem Deichselholm eines Camping- und/oder Caravanfahrzeugs mittels einer entsprechenden Befestigungsvorrichtung, beispielsweise eine U-förmige Befestigungsschelle, befestigt wird oder in den Deichselholm bzw. an der Seite des Caravans bzw. des Wohnwagens integriert ist.

Insgesamt wird mit erfindungsgemäßen Haltevorrichtung eine kompakte Ausführungsform einer Haltevorrichtung zur Verfügung gestellt, welche eine sicherer Halterung von Fahrrädern mit unterschiedlichen Radgrößen ermöglicht, wobei die Haltevorrichtung zur Anordnung an unterschiedlichen Befestigungsorten ausgebildet ist.

Im folgend gezeigten Ausführungsbeispiel ist eine Ausführungsform der erfindungsgemäßen Haltevorrichtung dargestellt.

Es zeigen hierbei:
- Figur 1: eine schematische Darstellung der Haltevorrichtung in einer Hauptansicht;
- Figur 2: eine schematische Darstellung von zwei in einer Grundplatte integrierten Führungsschienen in einer Hauptansicht;
- Figur 3: eine schematische Darstellung der Grundplatte gem. Figur 2 in einer Draufsicht;
- Figur 4 und Figur 5: eine schematische Darstellung einer Klemmbacke in zwei unterschiedlichen Anordnungspositionen in der Seitenansicht;
- Figur 6: eine schematische Darstellung einer Haltevorrichtung gem. Figur 1 mit angeordneter Befestigungsvorrichtung in einer Seitenansicht.

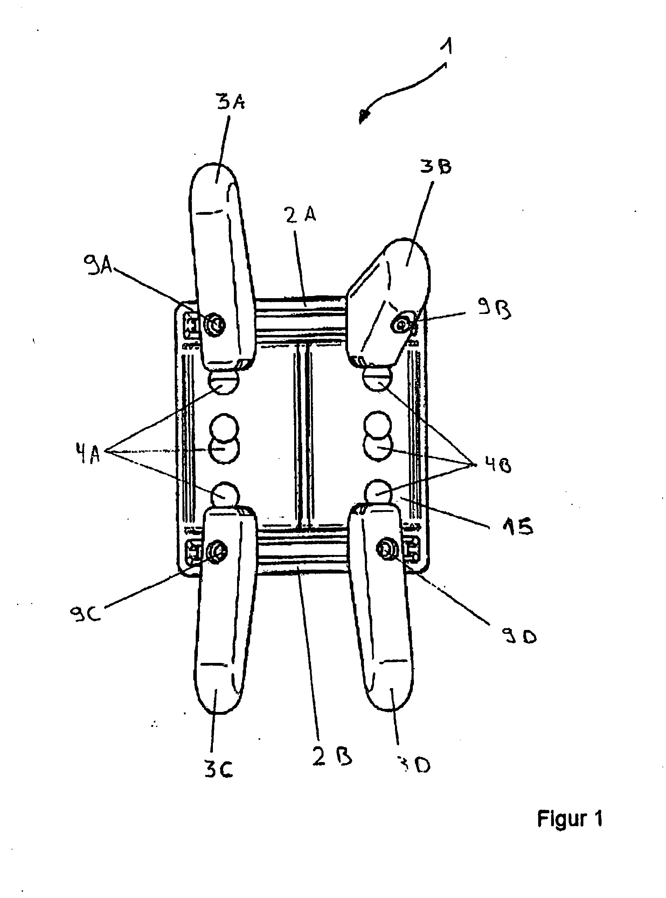

In Figur 1 ist eine schematische Darstellung einer erfindungsgemäßen Haltevorrichtung 1 in einer Hauptansicht gezeigt, wobei die Haltevorrichtung 1 zwei voneinander beabstandete Führungsschienen 2A, 2B zur Aufnahme von Klemmbacken 3A, 3B, 3C und 3D umfasst. Die beiden voneinander beabstandeten Führungsschienen 2A und 2B sind in der hier dargestellten Ausführungsform der Haltevorrichtung 1 in eine Grundplatte 15 integriert, wobei die Führungsschienen 2A, 2B und die Grundplatte 15 einstückig ausgeführt sind. Die Grundplatte 15 mit den darin integrierten Führungsschienen 2A und 2B kann beispielsweise aus einem Aluminium- oder aus einem Kunststoff- Material hergestellt werden, wobei es möglich ist, die beiden Führungsschienen 2A, 2B mittels einer spanabhebenden Bearbeitung in die Grundplatte 15 einzuarbeiten.

Die in Figur 1 dargestellte, bevorzugte Ausführungsform der erfindungsgemäßen Vorrichtung weist zwei übereinander angeordnete Führungsschienen 2A, 2B auf, an welchen insgesamt vier Klemmbacken 3A bis 3D in einer übereinander und nebeneinander liegenden Position angeordnet sind. Die Klemmbacken 3A bis 3D sind in den Führungsschienen 2A und 2B verschiebbar, wodurch der Abstand zweier an gegenüberliegenden Seiten eines Reifens anliegenden Klemmbacken 3A bis 3D auf die jeweilige Reifenbreite des zu haltenden Rades einstellbar ist.

In einer hier nicht dargestellten Ausführungsform ist es denkbar, dass die Führungsschiene 2A, 2B ein für sich separates Bauteil bildet, an welchem die Klemmbacken 3A, 3B, 3C und 3D mittels entsprechender Befestigungsmittel 9A bis 9D unabhängig voneinander anordnungsbar bzw. positionierbar sind.

Zur Befestigung der Grundplatte 15 weist diese mindestens zwei Bohrungen 4A, 4B auf, welche zur Befestigung der Grundplatte 15 mittels entsprechender Befestigungsmittel ausgebildet sind.

Die Grundplatte 15 weist in der hier dargestellten Ausführungsform der Erfindung eine vorzugsweise rechteckige Form auf, deren Außenabmessungen an das Längenmaß der Führungsschienen 2A und 2B angepasst werden können.

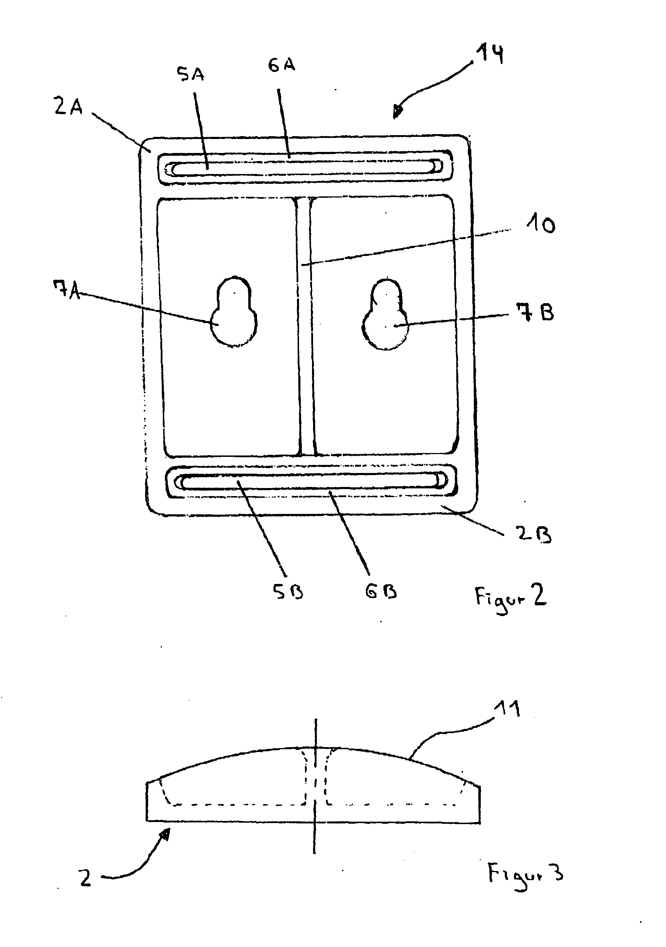

In Figur 2 ist eine schematische Darstellung der Grundplatte 15 in einer Hauptansicht dargestellt, welche zwei in die Grundplatte 15 integrierte Führungsschienen 2A und 2B in Randbereich der Grundplatte 15 aufweist, wobei die beiden Führungsschienen 2A und 2B vorzugsweise parallel zueinander beabstandet in den Randbereichen der Grundplatte 15 integriert sind.

Die Führungsschienen 2A, 2B weisen eine Durchgangsöffnung 5A, 5B auf, welche als Langloch ausgebildet ist. Die Durchgangsöffnung 5A und 5A weist auf der Fahrrad aufnehmenden eine die Durchgangsöffnung 5A, 5B einschließende Phase 6A, 6B auf, welche ausgehend von der Oberfläche der Grundplatte 15 in Richtung der Durchgangsöffnung 5A, 5B schräg verläuft.

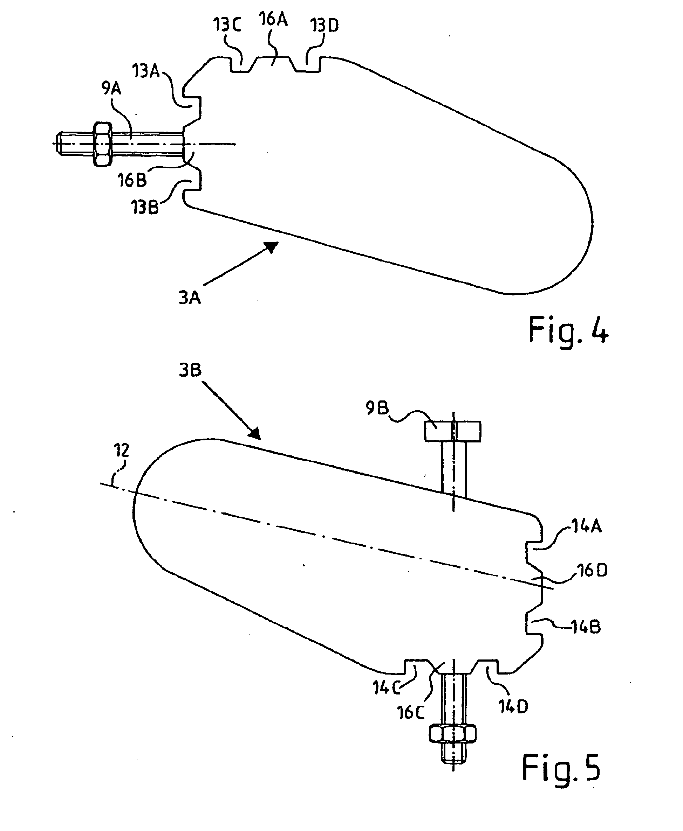

Die Durchgangsöffnung 5B, 5B bildet zusammen mit der die Durchgangsöffnung 5B, 5B umschließenden Phase 6A, 6B ein Aufnahmeprofil, welches im Zusammenhang mit der Figurenbeschreibung zu den Figuren 4 und 5 näher beschrieben wird.

Rückblickend auf die Figur 1 wird die Klemmbacke 3A bis 3D auf der Führungsschiene 2A, 2B angeordnet, wobei ein entsprechendes Befestigungsmittel 9A, 9B die Klemmbacke 3A bis 3D sowie die sich daran anschließende Durchgangsöffnung 5A, 5B durchgreift und die Klemmbacke 3A bis 3D auf der Führungsschiene 2A, 2B lösbar befestigt.

Auf Grund der Ausführung der Durchgangsöffnung 5A, 5B als Langloch kann die Klemmbacke 3A bis 3D bei gelöstem Befestigungsmittel 9A bis 9D auf der Führungsschiene 2A, 2B verschoben werden. Durch die Verschiebung von beispielsweise zwei voneinander beabstandeten Klemmbacken 3A bis 3D auf der Führungsschiene 2A, 2B kann die Öffnung zwischen den beiden Klemmbacken 3A bis 3D auf die Radbreite eines Fahrrades angepasst werden.

Die Klemmbacke 3A bis 3D kann als Hohlkörper hergestellt werden, welcher auf der Oberfläche eine flächige Ausnehmung aufweist. Diese Ausnehmung bildet eine Reduzierung der Abkühlzeiten der Klemmbacke während ihrer Herstellung sowie eine Reduzierung ihres Eigengewichtes.

In Figur 3 ist eine schematische Darstellung der Grundplatte 15 gem. Figur 2 in einer Draufsicht dargestellt, wobei die zur Fahrrad aufnehmenden Seite weisende Oberfläche 11 der Grundplatte 15 einen konvexen Oberflächenverlauf aufweist. Dieser konvexe Verlauf der Oberfläche 11 ermöglicht die Bildung einer keilförmig verlaufenden zwischen zwei voneinander beabstandeten Klemmbacken in jeder Anordnungsposition auf der Führungsschiene 2A, 2B. Auf Grund der keilförmig verlaufenden Öffnung zwischen den Klemmbacken 3A bis 3D kann eine ausreichende Klemmwirkung zum Halten eines Fahrrades in der Haltevorrichtung 1 erzeugt werden.

Zur Gewichtserleichterung einer beispielsweise aus einem Aluminium- oder Kunststoff- Material hergestellten Grundplatte 15 weist diese kassettenförmige Vertiefungen auf, welche bei der Herstellung der Grundplatte 15, beispielsweise im Aluminium Druckgussverfahren, oder durch eine entsprechende spanabhebende Nachbearbeitung ausgehend von der Oberfläche 11 gebildet sind.

Es ist denkbar, dass eine weitere, hier nicht dargestellte Ausführungsform der Grundplatte 15 beispielsweise drei nebeneinander angeordnete, kassettenförmige Vertiefungen umfasst, welche zwei zueinander beabstandete Mittelstege bilden. Zwischen den Mittelstegen kann eine Durchgangsbohrung zur Anordnung eines Adapterelementes auf der Rückseite der Grundplatte 15 gebildet werden, um eine flexible Anordnung der erfindungsgemäßen Haltevorrichtung 1 für unterschiedliche Anordnungspositionen zu verbessern, beispielsweise die Anordnung an einem Pfosten oder an einer Deichsel eines Wohnmobils.

In den Figuren 4 und 5 ist eine schematische Darstellung einer Klemmbacke 3A bis 3D in einer Seitenansicht gezeigt, wobei sich die beiden Figuren 4 und 5 lediglich in der Art ihrer Befestigung mittels eines Befestigungsmittels 9A, 9B unterscheiden.

Die Klemmbacke 3A bis 3D weist vorzugsweise eine längliche Form auf, wobei die am freien Ende der Klemmbacke 3A bis 3D angeordnete Stirnfläche abgerundet ist. Die der Rundung der Klemmbacke 3A bis 3D gegenüberliegenden Stirnflächen sind rechtwinklig zueinander ausgebildet, wobei jede Stirnfläche mindestens zwei Einkerbungen 13A bis 13D und 14A bis 14D aufweist, welche einen dazwischen liegenden Steg 16A bis 16D bilden.

Der zwischen den Einkerbungen 13A bis 13D und 14A bis 14D gebildete Steg 16A bis 16d ist keilförmig für einen Eingriff in die Fase 6A, 6B der Durchgangsöffnung 5A, 5B in den Führungsschienen 2A, 2B angepasst.

Zur Befestigung einer Klemmbacke 3A bis 3D in der Führungsschiene 2A, 2B weist diese eine durch den Körper der Klemmbacke 3A, 3D und im Bereich des Steges 16A, 16B austretende Durchgangsöffnung (hier nicht dargestellt), die zur Befestigung der Klemmbacke 3A, 3D an einer Führungsschiene 2A, 2B von einem Befestigungsmittel 9A bis 9D durchgriffen ist und die Klemmbacke 3A bis 3D mittels Durchgreifen der Durchgangsöffnung 5A, 5B an der Führungsschiene 2A, 2B befestigbar ist.

Auf Grund der Ausbildung mehreren Einkerbungen 13A bis 13D und 14A bis 14D kann eine Klemmbacke 3A bis 3D derart an der Führungsschiene 2A, 2B befestigt werden, dass eine durch die Klemmbacke 3A bis 3D verlaufende Längsachse 12 in Richtung einer Bodenfläche oder in der der Bodenfläche gerichteten Richtung entgegengesetzt weist.

Auf Grund der unterschiedlichen Richtungen der Längsachse 12 der Klemmbacke 3A bis 3D können Fahrräder mit unterschiedlichen Raddurchmessern in der erfindungsgemäßen Haltevorrichtung 1 sicher gehalten werden. Bei der Anordnung in vertikaler Richtung voneinander beabstandeten Klemmbacken 3A, 3D kann die Standsicherheit eines aufzunehmenden Fahrrades in der Haltevorrichtung 1 durch die zusätzliche Bildung von Kontaktpunkten zwischen den Klemmbacken 3A bis 3D und der Manteloberfläche eines Rades verbessert werden.

Die konvex verlaufende Oberfläche 11 in der Führungsschiene 2A, 2B mit der sich in Richtung des aufzunehmenden Rades sich bildende, keilförmige Öffnung der Klemmbacken 3A bis 3D gewährleisten eine Aufnahme eines Rades, welches lediglich linienförmige bzw. punktförmige Anlagenflächen zwischen den Klemmbacken 3A bis 3D und der Reifenoberfläche bildet.

Darüber hinaus vermeidet eine Anordnung der Klemmbacken 3A, 3D mit einer keilförmig verlaufenden Öffnung eine eventuelle Beschädigung einer Radfelge oder von Radspeichen während des Haltens des Fahrrades in der Haltevorrichtung 1.

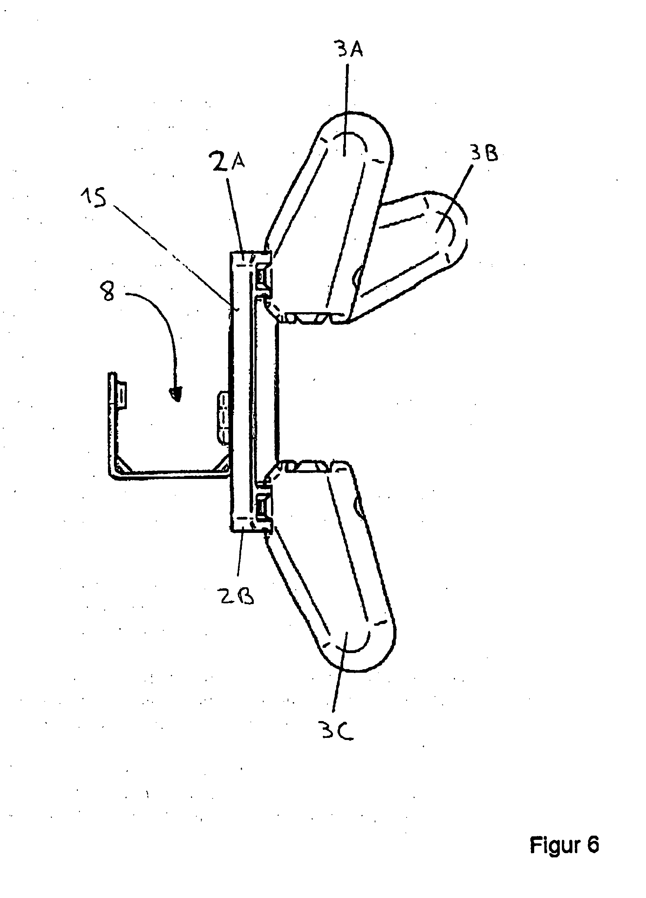

In Figur 6 ist eine schematische Darstellung einer Haltevorrichtung 1 gem, den Figuren 1 bis 5 in einer Seitenansicht dargestellt, wobei die Haltevorrichtung 1 zwei voneinander beabstandete Führungsschienen 2A, 2B umfasst, die in einer Grundplatte 15 integriert sind.

Die der konvex verlaufenden Oberfläche gegenüberliegende Oberfläche der Grundplatte 15 steht mit einer Befestigungsvorrichtung in Verbindung, die in der hier dargestellten Ausführungsform eine Befestigung der Haltevorrichtung 1 beispielsweise an einer Wandfläche bzw. an einem Pfosten ermöglicht.

Zur Befestigung der Haltevorrichtung 1 an unterschiedlichen Orten ist diese mit Befestigungsvorrichtungen 8 verbindbar, wobei die Befestigungsvorrichtung 8 der jeweiligen örtlichen Anordnungsposition angepasst ist. Beispielsweise kann die Haltevorrichtung 1 mit einer als Klemmhalterung ausgebildete Befestigungsvorrichtung 8 verbunden werden, welche eine Anordnung der Haltevorrichtung 1 beispielsweise an der Stoßstange eines Caravans vorsieht.

Insgesamt wird mit der erfindungsgemäßen Haltevorrichtung 1 eine einfache und sichere Halterung eines Fahrrades an unterschiedlichen Orten mit einer verbesserten Standsicherheit ermöglicht.

### Bezugszeichenliste:

- 1: Haltevorrichtung
- 2A: Führungsschiene
- 2B: Führungsschiene
- 2C: Führungsschiene
- 3A: Klemmbacke
- 3B: Klemmbacke
- 3C: Klemmbacke
- 3D: Klemmbacke
- 4A: Bohrung
- 4B: Bohrung
- 5A: Durchgangsöffnung
- 5B: Durchgangsöffnung
- 6A: Fase
- 6B: Fase
- 7A: Ausnehmung
- 7B: Ausnehmung
- 8: Befestigungsvorrichtung
- 9A: Befestigungsmittel
- 9B: Befestigungsmittel
- 9C: Befestigungsmittel
- 9D: Befestigungsmittel
- 10: Mittelsteg
- 11: Oberfläche, konvexer Verlauf
- 12: Längsachse, Klemmbacke
- 13A: Einkerbung
- 13B: Einkerbung
- 13C: Einkerbung
- 13D: Einkerbung
- 14A: Einkerbung
- 14B: Einkerbung
- 14C: Einkerbung
- 14D: Einkerbung
- 15: Grundplatte

## Patentansprüche

1. Vorrichtung (1) zum Halten eines Fahrrades, umfassend wenigstens eine Führungsschiene (2A, 2B) zur Anordnung von Halteelementen und umfassend mindestens zwei als Haltelement ausgebildete Klemmbacken (3A bis 3D) zur Aufnahme eines Rades des Fahrrades, **dadurch gekennzeichnet daß**, die Führungsschiene (2A, 2B) einen zur das Fahrrad aufnehmenden Seite gekrümmten Verlauf aufweist und wobei zwei voneinander beabstandete Klemmbacken (3A bis 3D) in der Führungsschiene (2A, 2B) geführt und gehaltert sind und durch den Verlauf der Führungsschiene eine sich keilförmig erweiternde Öffnung zur Aufnahme des Rades bilden und wobei der Abstand zwischen zwei Klemmbacken in horizontaler Anordnungsebene einstellbar ist, wodurch eine Anpassung an unterschiedliche Reifendicken des Rades ermöglicht wird.

2. Vorrichtung nach Anspruch 1, **dadurch gekennzeichnet, dass** die Oberfläche der Führungsschiene einen konvexen Verlauf aufweist.

3. Vorrichtung nach einem der vorhergehenden Ansprüche, **dadurch gekennzeichnet, dass** die Vorrichtung zwei Führungsschienen (2A, 2B) aufweist.

4. Vorrichtung nach einem der vorhergehenden Ansprüche, **dadurch gekennzeichnet, dass** die Führungsschiene (2A, 2B) in einer Grundplatte (14) integriert ist.

5. Vorrichtung nach einem der vorhergehenden Ansprüche, **dadurch gekennzeichnet, dass** wenigstens eine der Klemmbacken (3A bis 3D) laschenförmig ausgebildet ist.

6. Vorrichtung nach einem der vorhergehenden Ansprüche, **dadurch gekennzeichnet, dass** der Abstand zwischen zwei Klemmbacken (3A bis 3D) variabel einstellbar ist.

7. Vorrichtung nach einem der vorhergehenden Ansprüche, **dadurch gekennzeichnet, dass** die Position der Klemmbacke (3A bis 3D) derart einstellbar ist, dass die Längsachse (12) der laschenförmigen Klemmbacke (3A bis 3D) tangential zum Reifen eines Fahrzeugs ausrichtbar ist.

8. Vorrichtung nach einem der vorhergehenden Ansprüche, **dadurch gekennzeichnet, dass** die Klemmbacke (3A bis 3D) derart ausgebildet ist, dass ihre Form beim Angreifen an dem Reifen dessen Verlauf folgt.

9. Vorrichtung nach einem der vorhergehenden Ansprüche, **dadurch gekennzeichnet, dass** die Breitenabmessung der laschenförmigen Klemmbacke (3A bis 3D) einem Dickenmaß des Reifens eines Fahrzeuges angepasst ist.

10. Vorrichtung nach einem der vorhergehenden Ansprüche, **dadurch gekennzeichnet, dass** die Klemmbacke (3A bis 3D) auf mindestens zwei Stirnflächen Einkerbungen (13A bis 13D; 14A bis 14D) zu einer Anordnung auf Umschlag aufweist.

11. Vorrichtung nach einem der vorhergehenden Ansprüche, **dadurch gekennzeichnet, dass** die Grundplatte (15) eine der Fahrrad aufnehmenden Seite gegenüberliegende, ebene Auflagefläche aufweist.

12. Vorrichtung nach einem der vorhergehenden Ansprüche, **dadurch gekennzeichnet, dass** eine Befestigungsvorrichtung (8) zur Befestigung an einem Fahrzeug, einem Gebäude, einem Aufbau oder dergleichen vorhanden ist.

13. Vorrichtung nach einem der vorhergehenden Ansprüche, **dadurch gekennzeichnet, dass** die Vorrichtung (1) zylinderförmig ausgebildet ist.

14. Fahrzeug, insbesondere Camping- und/oder Caravanfahrzeug, **dadurch gekennzeichnet, dass** das Fahrzeug mit einer Vorrichtung (1) nach einem der vorgenannten Ansprüche ausgebildet ist, und die Vorrichtung in den Deichselholm und/oder an der Seite des Fahrzeugs integriert ist.

## Claims

1. A device (1) for holding a bicycle, comprising at least one guide rail (2A, 2B) for the arrangement of holding elements and comprising at least two clamping jaws (3A to 3D) designed as holding elements for the accommodation of a wheel of the bicycle, **characterized in that** the guide rail (2A, 2B) has a curved course for the side receiving the bicycle and wherein two clamping jaws (3A to 3D) spaced apart from each other are guided and supported in the guide rail (2A, 2B) and through the course of the guide rail form an opening expanding in a wedge-shaped manner for accommodating the wheel and wherein the distance between two clamping jaws is adjustable in the horizontal arrangement level, whereby an adaptation is facilitated to different tire thicknesses of the wheel.

2. A device according to claim 1, **characterized in that** the surface of the guide rail has a convex course.

3. A device according to one of the preceding claims, **characterized in that** the device has two guide rails (2A, 2B).

4. A device according to one of the preceding claims, **characterized In that** the guide rail (2A, 2B) is integrated in a base plate (14).

5. A device according to one of the preceding claims, **characterized in that** at least one of the clamping jaws (3A to 3D) is designed bracket-shaped.

6. A device according to one of the preceding claims, **characterized in that** the distance between two clamping jaws (3A to 3D) is variably adjustable.

7. A device according to one of the preceding claims, **characterized In that** the position of the clamping jaw (3A to 3D) is adjustable In such a manner that the longitudinal axis (12) of the bracket-shaped clamping jaw (3A to 3D) can be aligned tangentially to the tire of a vehicle.

8. A device according to one of the preceding claims, **characterized in that** the clamping jaw (3A to 3D) is designed in such a manner that its form when engaging the tire follows its course.

9. A device according to one of the preceding claims, **characterized in that** the width dimension of the bracket-shaped clamping jaw (3A to 3D) is adapted to a thickness dimension of the tire of a vehicle.

10. A device according to one of the preceding claims, **characterized in that** on at least two front surfaces the clamping jaw (3A to 3D) has notches (13A to 13D; 14A to 14D) for an arrangement in a turned position.

11. A device according to one of the preceding claims, **characterized In that** the base plate (15) has a level contact surface opposite the side receiving the bicycle.

12. A device according to one of the preceding claims, **characterized in that** a mounting device (8) is available for attachment to a vehicle, a building, a structure or the like.

13. A device according to one of the preceding claims, **characterized in that** the device (1) is designed cylindrically.

14. A vehicle, particularly a camping and/or caravan vehicle, **characterized in that** the vehicle is designed with a device (1) according to one of the preceding claims, and the device is integrated into the drawbar spar and/or on the side of the vehicle.

## Revendications

1. Dispositif (1) permettant de maintenir une bicyclette, comportant au moins un rail de guidage (2A, 2B) pour l'agencement d'éléments de retenue et comportant au moins deux mâchoires de serrage (3A à 3D), réalisées sous forme d'élément de retenue et destinées à recevoir une roue de la bicyclette, **caractérisé en ce que** le rail de guidage (2A, 2B) possède un tracé incurvé vers le côté recevant la bicyclette, et deux mâchoires de serrage (3A à 3D), écartées l'une de l'autre, étant logées et maintenues dans le rail de guidage (2A, 2B) et formant, grâce au tracé du rail de guidage, une ouverture s'élargissant en cône, destinée à recevoir la roue, et la distance entre deux mâchoires de serrage est réglable dans le plan d'agencement horizontal, ce qui permet un ajustement à différentes épaisseurs de pneus de la roue.

2. Dispositif selon la revendication 1, **caractérisé en ce que** la surface du rail de guidage présente un tracé convexe.

3. Dispositif selon l'une quelconque des revendications précédentes, **caractérisé en ce que** ledit dispositif comporte deux rails de guidage (2A, 2B).

4. Dispositif selon l'une quelconque des revendications précédentes, **caractérisé en ce que** le rail de guidage (2A, 2B) est intégré dans une plaque de base (14).

5. Dispositif selon l'une quelconque des revendications précédentes, **caractérisé en ce qu'**au moins l'une des mâchoires de serrage (3A à 3D) est réalisée sous forme de patte.

6. Dispositif selon l'une quelconque des revendications précédentes, **caractérisé en ce que** la distance entre deux mâchoires de serrage (3A à 3D) est réglable de manière variable.

7. Dispositif selon l'une quelconque des revendications précédentes, **caractérisé en ce que** la position de la mâchoire de serrage (3A à 3D) est réglable de telle sorte que l'axe longitudinal (12) de la mâchoire de serrage (3A à 3D) en forme de patte peut être orienté tangentiellement au pneu d'un véhicule.

8. Dispositif selon l'une quelconque des revendications précédentes, **caractérisé en ce que** la mâchoire de serrage (3A à 3D) est réalisée de telle sorte que sa forme suit le tracé du pneu lorsqu'elle entre en contact avec celui-ci.

9. Dispositif selon l'une quelconque des revendications précédentes, **caractérisé en ce que** la dimension en largeur de la mâchoire de serrage (3A à 3D) en forme de patte est ajustée à la dimension en épaisseur du pneu d'un véhicule.

10. Dispositif selon l'une quelconque des revendications précédentes, **caractérisé en ce que** la mâchoire de serrage (3A à 3D), sur au moins deux faces frontales, comporte des encoches (13A à 13D ; 14A à 14D) pour un agencement en changement.

11. Dispositif selon l'une quelconque des revendications précédentes, **caractérisé en ce que** la plaque de base (15) comporte une surface de pose plane, opposée au côté recevant la bicyclette.

12. Dispositif selon l'une quelconque des revendications précédentes, **caractérisé en ce qu'**il est prévu un dispositif de fixation (8) permettant la fixation à un véhicule, un bâtiment, une carrosserie ou tout élément similaire.

13. Dispositif selon l'une quelconque des revendications précédentes, **caractérisé en ce que** ledit dispositif (1) est réalisé avec une forme cylindrique.

14. Véhicule, en particulier camping-car ou véhicule à caravane, **caractérisé en ce que** le véhicule est réalisé avec un dispositif (1) selon l'une quelconque des revendications précédentes, et ledit dispositif est Intégré dans le longeron du timon et/ou sur le côté du véhicule.
